# EUROPEAN PATENT SPECIFICATION

(11) **EP 3 956 172 B1**
(45) Date of publication and mention of the grant of the patent: **07.12.2022**
(21) Application number: 20725942.5
(22) Date of filing: 07.05.2020
(51) Int. Cl.: B60N 2/75, B60P 7/08, B60R 11/00

(54) **ARMREST FOR VEHICLE SEAT**
ARMLEHNE FÜR FAHRZEUGSITZ
ACCOUDOIR POUR SIÈGE DE VÉHICULE

(30) Priority: 10.05.2019 FR 1904853
(43) Date of publication of application: 23.02.2022
(73) Proprietor: Martur France Automotive Seating and Interiors Sarl, 92500 Rueil-Malmaison (FR)
(72) Inventor: PEREZ, Jean Claude, 92500 Rueil-Malmaison (FR)
(74) Representative: Robba, Pierpaolo
(86) International application number: PCT/IB2020/054334
(87) International publication number: WO 2020/229963

(56) References cited:
- EP-A1- 2 489 554
- DE-C2- 19 655 068
- DE-U1- 9 407 821
- FR-A1- 2 993 520

## Description

### Technical Field

The present invention relates to an armrest for a vehicle seat.

More particularly, the present invention relates to an armrest for a vehicle seat which is provided with a strap arranged transverse to the armrest body.

### Background Art

Armrests for vehicle seats provided with a strap arranged transverse to the armrest body are known from the art and they are widely spread, especially for use in association with rear seats.

This strap usually extends over a face of the armrest body, in a direction substantially transverse to the longitudinal axis of the armrest body, and it is fastened to the armrest body on both opposite sides of said face, for instance by sewing.

This strap is usually made of the same material as the seat cover, such as, for instance leather or a textile material.

The main function of such a strap is to hide any possible manufacturing defects. By way of example, if the cover of the rear seats is made with two different colors, such strap can be useful for hiding any possible offset in the lines of junction between these two colors.

Furthermore, as the armrests of vehicle seats (especially the armrests of rear seats) are usually tiltable between a retracted position and an extended position, the strap can be used as a grip for bringing the armrest from the retracted position to the extended position and/or vice versa.

As a result, in use the strap is repeatedly subjected to traction stresses, so that over time it becomes worn and deformed.

Due to such wear, over time the aesthetical appearance of these strap is dramatically deteriorated.

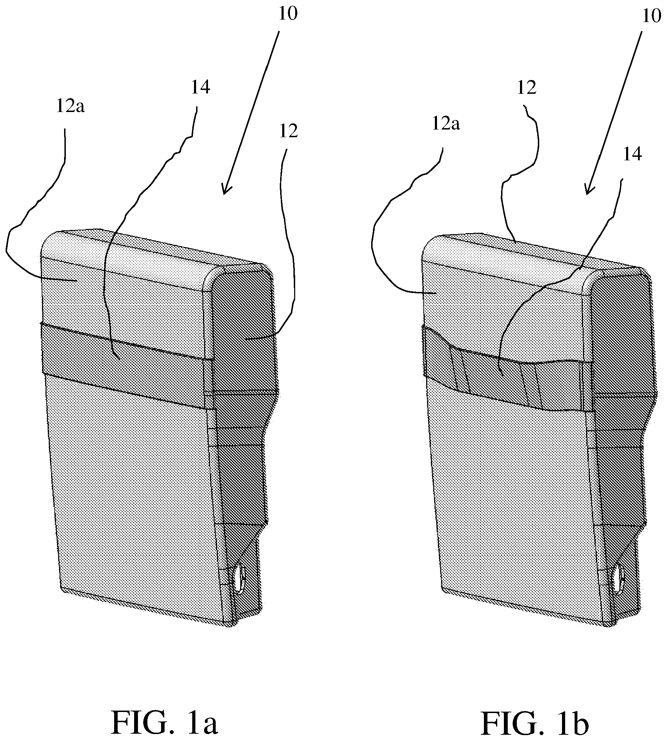

Figures 1a and 1b schematically show an armrest 10 for vehicle seat according to prior art, provided with a strap 14 extending over a face 12a of the armrest body 12, in a new and in a worn configuration, respectively.

Document FR 2993520 discloses an armrest provided with a strap made of an elastic material.

However, such solution does not allow to overcome the above-mentioned technical problem.

Due to wear and the repeated traction stresses, even a strap made of elastic material over time loses its elasticity and becomes deformed.

The object of the present invention is to overcome the above-mentioned drawbacks by providing an armrest for vehicle seat provided with an improved strap, the performance and appearance of which are not deteriorated over time.

This and other objects are achieved by an armrest for vehicle seat as claimed in the attached claims.

### Summary of Invention

The armrest of the invention is provided with a strap that extends over a face of the armrest body, in a direction substantially perpendicular to the longitudinal axis of the armrest body.

According to the invention, instead of being fastened to the armrest body, the opposite ends of the strap are fastened to respective elastic elements, at a first end of said elastic elements.

According to a possible embodiment of the invention, the opposite end of each elastic element is fastened to the armrest body.

According to a further embodiment of the invention, the opposite end of each elastic element penetrates into the armrest body and it is fastened to a corresponding support received inside said armrest body and fastened thereto.

Preferably, the strap is made of an inextensible material.

Accordingly, the strap does not become deformed over time, so that neither its performance nor its appearance is deteriorated.

Advantageously, as each elastic element is almost completely received inside the armrest body and only a small end portion of each elastic element protrudes out of the armrest body, such elastic elements do not affect the appearance of the armrest.

Accordingly, they can be made of a material having a high resistance to wear (namely much higher than the material used for making known elastic straps) even if having a poor appearance

### Brief Description of Drawings

Further features and advantages of the invention will become more evident from the following description of a preferred embodiment of the invention, given by way of non-limiting example, with reference to the attached Figures, in which:
**Fig. 1a**
   Figure 1a schematically shows an armrest for vehicle seat provided with an elastic strap according to prior art.
**Fig. 1b**
   Figure 1b schematically shows an armrest for vehicle seat provided with the elastic strap of Figure 1a, shown in a worn configuration.
**Fig. 2**

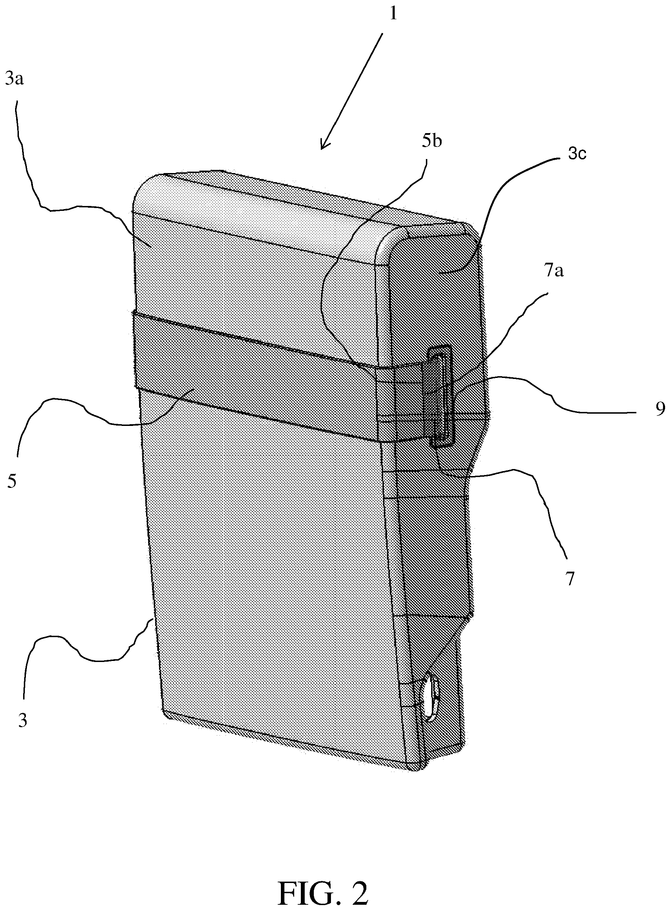

   Figure 2 is a perspective view of an armrest for vehicle seat according to the invention.
**Fig. 3**

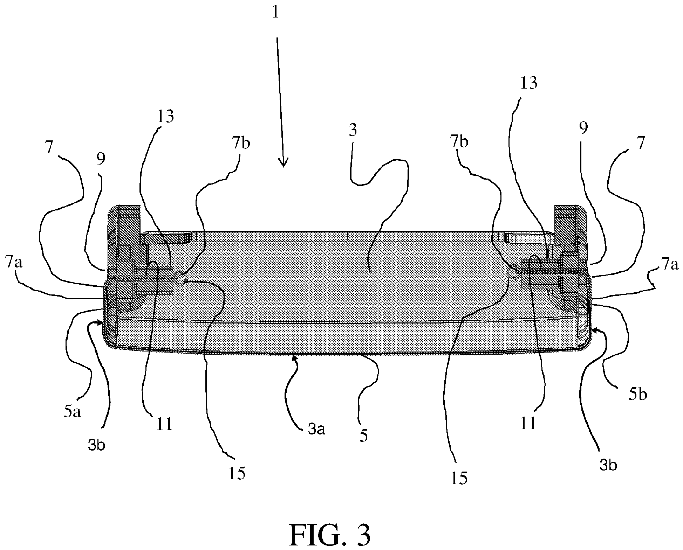

   Figure 3 is a cross-sectional view of the armrest of Figure 2.

### Description of Embodiments

With reference to Figures 2 and 3, an armrest for vehicle seat 1 according to the invention is schematically shown.

The armrest 1 can be advantageously - yet not exclusively - used in association with a rear seat.

In a per se known manner, the armrest 1 comprises an armrest body 3, which is preferably provided, at an end portion thereof, with means for a pivoting connection to a fixed structure, such as a vehicle seat or some fixed part or the vehicle body.

In this way, the armrest 1 can be brought from a retracted position (in which, for instance, it is substantially flush with the backrest of an adjacent vehicle seat) to an extracted position (in which, for instance, it is substantially perpendicular to the backrest of the adjacent vehicle seat), and vice versa.

The armrest 1 is provided with a strap 5, which extends over a face 3a of the armrest body 3, in a direction substantially perpendicular to the longitudinal axis of the armrest body 3.

In the shown embodiment, the strap extends over the face of the armrest body that is the lower face of said armrest body when the armrest is in its extended position.

According to the invention, the ends 5a, 5b of the strap 5 are not fastened to the armrest body 3.

Instead, each end 5a, 5b of said strap is fastened to a respective elastic element 7, at a first end 7a thereof.

In the shown embodiment, each elastic element 7 penetrates into the armrest body 3 through corresponding slot 9 which is provided in a respective side 3b, 3c of the armrest body 3 and the second, opposite end 7b of said elastic element is fastened to a corresponding support 13 received inside the armrest body.

Preferably, the second, opposite end 7b of said elastic element is fastened to the corresponding support 13 by means of a suitable fastening element 15, such a plastic profile, a clip or the like.

Preferably, each support 13 is provided with a groove 11 for the respective elastic element and each elastic element runs through said groove 11. In this way, each elastic element 7 can slide inside the groove 11 of the corresponding support 13, when it is stretched, but it is held to such support through its second end 7b.

Each support 13 is preferably mounted inside the armrest body adjacent to the respective side 3b, 3c of the armrest body, so that the inlet of the groove 11 is substantially flush with the slot 9 in the respective side 3b, 3c of the armrest body.

The support 13 can be made of any suitable material, for instance plastic material.

According to the invention, the strap 5 is preferably made of a substantially inextensible material, for instance a substantially inextensible textile material or leather.

As a consequence, when, in use, the strap 5 is pulled, it does not stretch; instead, the elastic elements 7 at both ends 5a, 5b of said strap stretch and then - due to their elastic properties - they tend to come back to their original size when the pulling action is released, thus keeping the strap 5 tensioned and as close as possible to the face 3a of the armrest body 3.

Advantageously, the elastic elements 7 are almost completely received inside the armrest body, and only the first end 7a of each elastic element 7 protrudes from said armrest body for being connected to the strap 5. As a result, said elastic elements 7 are barely visible from the outside.

As a consequence, the material of such elastic elements can be chosen according to its elastic properties and to its resistance to wear, irrespective of its appearance. Therefore, a material having very good elastic properties and/or very high resistance to wear can be advantageously chosen, even if its appearance is poor.

As a result, the elastic elements 7 will not become worn and deformed over time and, even after a prolonged use, they will keep the strap 5 well tensioned over the face 3a of the armrest body 3: nor the performance of this strap, nor its appearance will be deteriorated.

It is to be noted that, according to an alternative embodiment of the invention, each elastic element 7 could be directly fastened, at its second, opposite end 7b, to the armrest body 3; for instance, the second, opposite end 7b of each elastic element 7 could be sewn to the armrest body 3, or fastened to said armrest body by any suitable means.

According to this alternative embodiment, too, the elastic elements are scarcely visible from the outside, so that the material of such elastic elements can be chosen according to its elastic properties and to its resistance to wear, irrespective of its appearance.

From the above disclosure, it is evident that the invention achieves the object set forth above.

It is also evident that the embodiment disclosed above in detail shall be considered in no way as limiting and several modifications and variants within the reach of those skilled in the art can be implemented, if not thereby departing from the scope of protection as defined by the appended claims.

## Claims

1. Armrest (1) for vehicle seat, comprising an armrest body (3) and provided with a strap (5), extending over a face (3a) of said armrest body (3), **characterised in that** said strap (5) is made of a substantially inextensible material, **in that** each opposite end (5a, 5b) of said strap is fastened to a respective elastic element (7), at a first end (7a) of said elastic element, and **in that** each elastic element (7) penetrates into the armrest body (3) and the second end (7b) of each elastic element, opposite to said first end (7a) of said elastic element, is fastened to said armrest body (3) or to a respective support (13) received inside said armrest body.

2. Armrest (1) according to claim 1, wherein each of said elastic elements (7) penetrates into the armrest body through a respective slot (9) provided in a respective side (3b, 3c) of the armrest body (3).

3. Armrest (1) according to claim 1 or 2, wherein each of said support (13) is provided with a groove (11) for the respective elastic element (7), said elastic element being able to slide inside said seat when it is stretched.

4. Armrest (1) according to claims 2 and 3, wherein each support (13) is mounted inside the armrest body (3) adjacent to the respective side (3b, 3c) of said armrest body, so that the inlet of said groove (11) is substantially flush with said slot (9) in said respective side of said armrest body.

5. Armrest (1) according to any of the preceding claims, wherein said elastic elements (7) are almost completely received inside said armrest body (3), and only the first end (7a) of each elastic element (7) protrudes from said armrest body for being connected to said strap (5).

6. Armrest (1) according to any of the preceding claims, wherein said second ends (7b) of said elastic elements (7) are fastened to the respective support (13) with the interposition of a fastening element (15).

7. Armrest (1) according to any of the preceding claims, wherein said elastic element (7) are made of a material having a high resistance to wear.

8. Armrest (1) according to any of the preceding claims, wherein said supports (13) are made of a plastic material.

9. Armrest (1) according to any of the preceding claims, wherein said strap (5) extends over said face (3a) of said armrest body in a direction that is substantially perpendicular to the longitudinal axis of said armrest body (3).

## Patentansprüche

1. Armlehne (1) für Fahrzeugsitz, mit einem Armlehnenkörper (3) und versehen mit einem Gurt (5), der sich über eine Oberfläche (3a) des Armlehnenkörpers (3) erstreckt, **dadurch gekennzeichnet, dass** der Gurt (5) aus einem im Wesentlichen undehnbaren Material hergestellt ist, dass jedes gegenüberliegende Ende (5a, 5b) des Gurts an einem entsprechenden elastischen Element (7) befestigt ist, nämlich an einem ersten Ende (7a) des elastischen Elements, und dass jedes elastische Element (7) in den Armlehnenkörper (3) hineinragt und das zweite Ende (7b) jedes elastischen Elements, das dem ersten Ende (7a) des elastischen Elements gegenüber liegt, an dem Armlehnenkörper (3) oder an einem entsprechenden Träger (13), der im Inneren des Armlehnenkörpers aufgenommen ist, befestigt ist.

2. Armlehne (1) nach Anspruch 1, wobei jedes der elastischen Elemente (7) durch einen entsprechenden Schlitz (9), der an einer entsprechenden Seite (3b, 3c) des Armlehnenkörpers (3) angeordnet ist, in den Armlehnenkörper (3) hineinragt.

3. Armlehne (1) nach Anspruch 1 oder 2, wobei jeder der Träger (13) mit einer Nut (11) für das entsprechende elastische Element (7) versehen ist, wobei das elastische Element in diesem Sitz gleiten kann, wenn es gedehnt wird.

4. Armlehne (1) nach Anspruch 2 oder 3, wobei jeder Träger (13) in dem Armlehnenkörper (3) angrenzend an die entsprechende Seite (3b, 3c) des Armlehnenkörpers angeordnet ist, so dass der Einlass der Nut (11) im Wesentlichen bündig mit dem Schlitz (9) in der entsprechenden Seite des Armlehnenkörpers angeordnet ist.

5. Armlehne (1) nach einem der vorstehenden Ansprüche, wobei die elastischen Elemente (7) nahezu vollständig im Inneren (3) des Armlehenkörpers (3) aufgenommen sind und nur das erste Ende (7a) jedes elastischen Elements (7) zur Verbindung mit dem Gurt (5) aus dem Armlehnenkörper herausragt.

6. Armlehne (1) nach einem der vorstehenden Ansprüche, wobei die zweiten Enden (7b) der elastischen Elemente (7) unter Zwischenlage eines Befestigungselements (15) an dem entsprechenden Träger (13) befestigt sind.

7. Armlehne (1) nach einem der vorstehenden Ansprüche, wobei das elastische Element (7) aus einem hoch verschleißfesten Material hergestellt ist.

8. Armlehne (1) nach einem der vorstehenden Ansprüche, wobei die Träger (13) aus Kunststoff sind.

9. Armlehne (1) nach einem der vorstehenden Ansprüche, wobei der Gurt (5) sich über die Oberfläche (3a) des Armlehnenkörpers in eine Richtung erstreckt, die im Wesentlichen senkrecht zu der Längsachse des Armlehnenkörpers (3) verläuft.

## Revendications

1. Accoudoir (1) pour siège de véhicule, comprenant un corps d'accoudoir (3) et pourvu d'une sangle (5) s'étendant sur une face (3a) de ce corps d'accoudoir (3), **caractérisée en ce que** cette sangle (5) est fabriquée en un matériau sensiblement inextensible, **en ce que** chaque extrémité opposée (5a, 5b) de cette sangle est fixée à un respectif élément élastique (7), à une première extrémité (7a) de cet élément élastique, et **en ce que** chaque élément élastique (7) pénètre dans le corps d'accoudoir (3) et la deuxième extrémité (7b), opposée à cette première extrémité (7a) de cet élément élastique, est fixée à ce corps d'accoudoir (3) ou bien à un support (13) respectif reçu à l'intérieur de ce corps d'accoudoir.

2. Accoudoir (1) selon la revendication 1, dans lequel chacun de ces éléments élastiques (7) pénètre dans le corps d'accoudoir par une fente (9) respective ménagée dans un côté (3b, 3c) respectif du corps d'accoudoir (3).

3. Accoudoir (1) selon la revendication 1 ou 2, dans lequel chacun de ces supports (13) est pourvu d'une rainure (11) pour le respectif élément élastique (7), cet élément élastique pouvant coulisser à l'intérieur de cette rainure lorsqu'il est étiré.

4. Accoudoir (1) selon les revendications 2 et 3, dans lequel chaque support (13) est monté à l'intérieur du corps d'accoudoir (3) de manière adjacente au côté (3b, 3c) respectif de ce corps d'accoudoir, de sorte que l'entrée de cette rainure (11) est sensiblement alignée à cette fente (9) dans ce côté respectif de ce corps d'accoudoir.

5. Accoudoir (1) selon l'une quelconque des revendications précédentes, dans lequel ces éléments élastiques (7) sont presque complètement reçus à l'intérieur de ce corps d'accoudoir (3), et seule la première extrémité (7a) de chaque élément élastique (7) s'étend hors de ce corps d'accoudoir pour être connectée à cette sangle (5).

6. Accoudoir (1) selon l'une quelconque des revendications précédentes, dans lequel ces deuxièmes extrémités (7b) de ces éléments élastiques (7) sont fixées au support (13) respectif avec l'interposition d'un élément de fixation (15).

7. Accoudoir (1) selon l'une quelconque des revendications précédentes, dans lequel cet élément élastique (7) est fabriqué d'un matériau ayant une résistance élevée à l'usure.

8. Accoudoir (1) selon l'une quelconque des revendications précédentes, dans lequel ces supports (13) sont réalisés en un matériau plastique.

9. Accoudoir (1) selon l'une quelconque des revendications précédentes, dans lequel cette sangle (5) s'étend sur cette face (3a) de ce corps d'accoudoir dans une direction sensiblement perpendiculaire à l'axe longitudinal de ce corps d'accoudoir (3).
